# EUROPEAN PATENT APPLICATION

(11) **EP 2 213 769 A1**
(43) Date of publication of application: **04.08.2010**
(21) Application number: 10275010.6
(22) Date of filing: 01.02.2010
(51) Int. Cl.: C25B 1/08, C25B 9/20

(54) **Hydrogen-oxygen generating apparatus**

(30) Priority: 03.02.2009 KR 20090008464
(71) Applicant: Hwang, Boo-Sung, Kyung-ki do (KR)
(72) Inventor: Hwang, Boo-Sung, Kyung-ki do (KR)
(74) Representative: Hocking, Adrian Niall

(57) **Abstract**

The hydrogen-oxygen generating apparatus comprises electrode plates 30 which keep electrically connected states while being closer to the edges 10c of the main hole 10a in the inner side of the insulation gasket 20 and has an electrode hole 31 in the inner side; a spacing ring 40 which is disposed between the frames 10' facing the electrode plates 30 and keeps electrically insulated by spacing not to contact with the frame 10' facing the electrode plates 30; a front cover 50 which is installed in front of the frames 10 and 10' and includes an inlet hole 51, an exhaust hole 52 for exhausting the mixed gas of hydrogen and oxygen, and a third engaging hole 50b corresponding to the first and second engaging holes 10b and 20b; a rear cover 60 which is installed behind the frames 10 and 10' and includes a drain hole 61 for draining water, an exhaust hole 62 for exhausting the mixed gas of hydrogen and oxygen, and a fourth engaging hole 60b corresponding to the first and second engaging holes 10a an 20a; and an engaging part 70 which passes through the first, second, third and fourth engaging holes 10b, 20b, 50b and 60b for thereby interconnecting the front and rear covers 50 and 60 and the frames 10 and 10', respectively.

## Description

### TECHNICAL FIELD

The present invention relates to a hydrogen-oxygen generating apparatus which makes it possible to effectively generate a mixed gas of oxygen and hydrogen.

### BACKGROUND ART

The apparatus for generating a mixed gas of oxygen and hydrogen is basically directed to generating hydrogen and oxygen as water is electrolyzed. Water with a small amount of electrolytes is inputted into an electrolytic cell with positive and negative electrode plates, and a DC voltage is applied for thereby generating a mixed gas of hydrogen and oxygen which are non-pollution energy source. At this time, the hydrogen and oxygen are generated at a molecular ratio of 2:1. Hydrogen is generated from the surface of the negative electrode plate in bubble forms, and oxygen is generated from the surface of the positive electrode plate in bubble forms. The thusly generated mixed gas of hydrogen and oxygen are combustible. Since the hydrogen and oxygen mixed gas does not produce any pollutant, so it is considered as an environment friendly energy source.

However, since the amount of hydrogen and oxygen produced is too small as compared to the electric energy applied to the positive and negative electrode plates, it is needed to mix a sub-fuel such as a propane gas into the mixed gas of hydrogen and oxygen and to burn the same, as a result which economic productivity is low.

### DISCLOSURE OF THE INVENTION

Accordingly, it is an object of the present invention to provide a hydrogen-oxygen generating apparatus.

It is another object of the present invention to provide a hydrogen-oxygen generating apparatus which can obtain a high productivity by extending the amount of mixed gas of oxygen and hydrogen as compared to electric energy used.

To achieve the above objects, there is provided a hydrogen-oxygen generating apparatus which comprises a plurality of frames 10 and 10' which includes a main hole 10a formed in a center portion and a plurality of first engaging holes 10b formed on an outer side of the main hole 10a; an insulation gasket 20 which is disposed between the frames 10 and 10'a and allows a frame 10 and another frame to space apart while sealing water and includes a second engaging hole 20b corresponding to the first engaging hole 20a; electrode plates 30 which keep electrically connected states while being closer to the edges 10c of the main hole 10a in the inner side of the insulation gasket 20 and has an electrode hole 31 in the inner side; a spacing ring 40 which is disposed between the frames 10' facing the electrode plate 30 and keeps electrically insulated by spacing not to contact with the frame 10' facing the electrode plates 30; a front cover 50 which is installed in front of the frames 10 and 10' and includes an inlet hole 51, an exhaust hole 52 for exhausting the mixed gas of hydrogen and oxygen, and a third engaging hole 50b corresponding to the first and second engaging holes 10b and 20b; a rear cover 60 which is installed behind the frames 10 and 10' and includes a drain hole 61 for draining water, an exhaust hole 62 for exhausting the mixed gas of hydrogen and oxygen, and a fourth engaging hole 60b corresponding to the first and second engaging holes 10a an 20a; and an engaging part 70 which passes through the first, second, third and fourth engaging holes 10b, 20b, 50b and 60b for thereby interconnecting the front and rear covers 50 and 60 and the frames 10 and 10', respectively.

There is further provided a front insulation gasket 20' disposed between the frames facing the front cover 50 and having a second engaging hole 20b corresponding to the first engaging hole 10b; and a rear insulation gasket 20" which is disposed between the frames facing the rear cover 60 and has a second engaging hole 20b corresponding to the first engaging hole 10b.

The electrode plates 30 are made of carbon nano tube alloy steel.

The surfaces of the electrode plates 30 are nano-polished so that the electrolysis can efficiently take place, and the bubbles of generated oxygen and hydrogen can easily detach.

The surfaces of the electrode plates 30 are attached by photo catalysts.

### EFFECTS

In the hydrogen-oxygen generating apparatus according to the present invention, the amount of mixed gas of hydrogen and oxygen increases as compared to an electric energy inputted, and it is possible to burn the mixed gas without adding a sub-fuel such as propane gas for thereby obtaining a high economic productivity.

Since the oxygen and hydrogen generated in bubble forms can be easily separated from the electrode plates, the effective area surface of the electrode plates from which electrolysis occur increases for thereby enhancing electrolyte efficiency.

Heat can be efficiently emitted while electrolysis are performed without using a separate heat radiating apparatus, so the entire construction can be minimized, and the electrolysis can be constantly performed.

The edge of the frame positioned in the interior of the insulation gasket functions as a terminal for applying electric power to the electrode plates and a support for supporting the electrode plates, so even when the electrode plates are made of weak materials the electrode plates can be stably and reliably supported.

### BRIEF DESCRIPTION OF THE DRAWINGS

The present invention will become better understood with reference to the accompanying drawings which are given only by way of illustration and thus are not limitative of the present invention, wherein;
Figure 1 is a perspective view of a hydrogen-oxygen generating apparatus according to the present invention;
Figure 2 is a disassembled perspective view of Figure 1; and
Figure 3 is a cross sectional view taken along line III-III of Figure 1.

### MODES FOR CARRYING OUT THE INVENTION

The hydrogen-oxygen generating apparatus according to the present invention will be described with reference to the accompanying drawings.

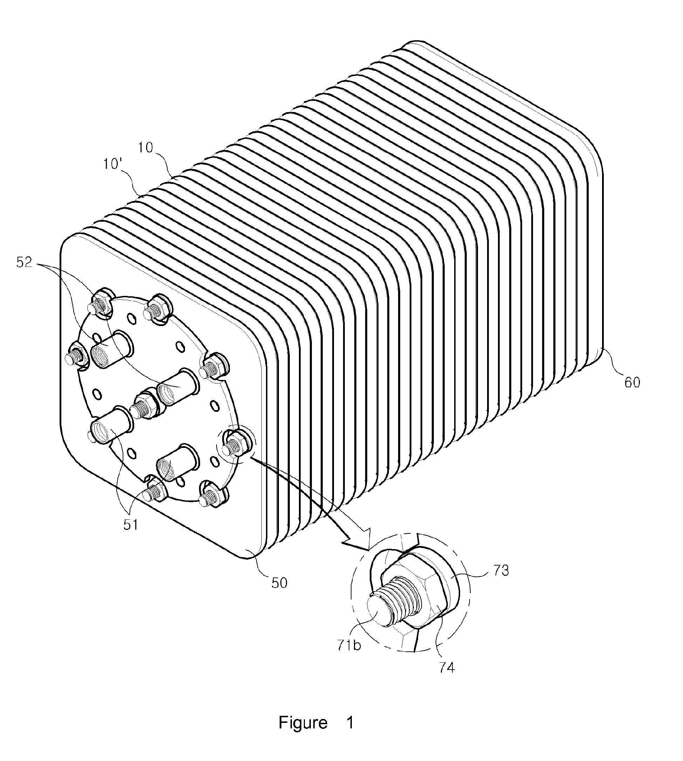

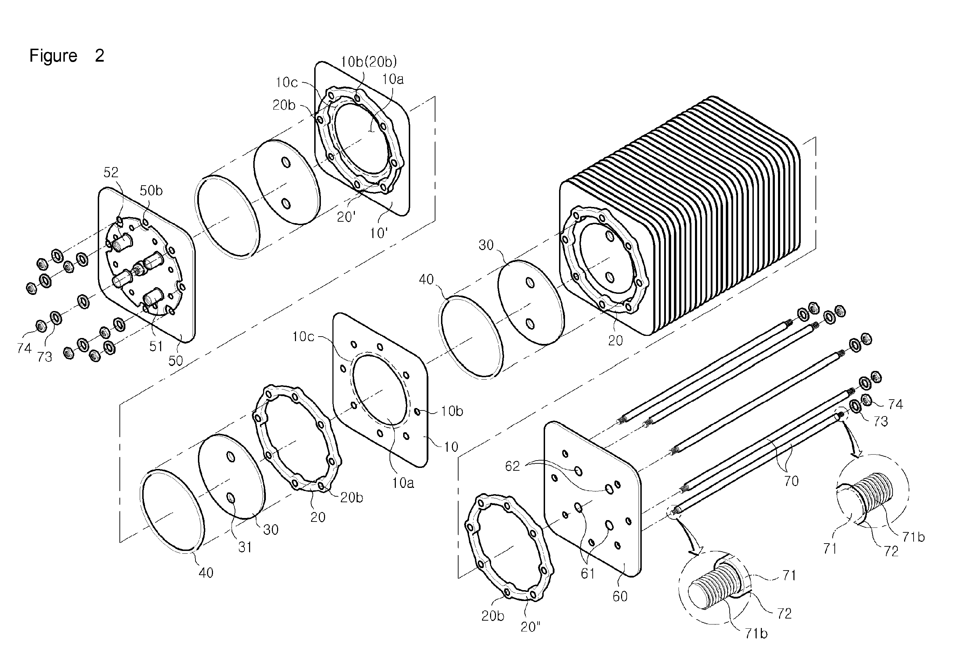

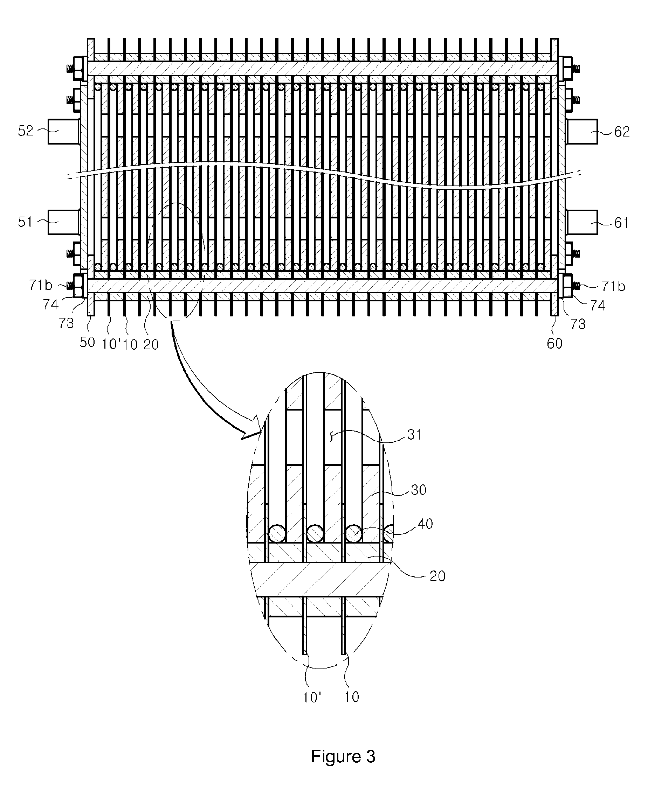

Figure 1 is a perspective view of an apparatus for generating a mixed gas of oxygen and hydrogen, and Figure 2 is a disassembled perspective view of Figure 1, and Figure 3 is a cross sectional view taken along like III-III' of Figure 1.

The apparatus for generating a mixed gas of oxygen and hydrogen comprises a plurality of frames 10 and 10' which includes a main hole 10a formed in a center portion and a plurality of first engaging holes 10b formed on an outer side of the main hole 10a; an insulation gasket 20 which is disposed between the frames 10 and 10'a and allows a frame 10 and another frame to space apart while sealing water and includes a second engaging hole 20b corresponding to the first engaging hole 20a; electrode plates 30 which keep electrically connected states while being closer to the edges 10c of the main hole 10a in the inner side of the insulation gasket 20 and has an electrode hole 31 in the inner side; a spacing ring 40 which is disposed between the frames 10' facing the electrode plate 30 and keeps electrically insulated by spacing not to contact with the frame 10' facing the electrode plates 30; a front cover 50 which is installed in front of the frames 10 and 10' and includes an inlet hole 51, an exhaust hole 52 for exhausting the mixed gas of hydrogen and oxygen, and a third engaging hole 50b corresponding to the first and second engaging holes 10b and 20b; a rear cover 60 which is installed behind the frames 10 and 10' and includes a drain hole 61 for draining water, an exhaust hole 62 for exhausting the mixed gas of hydrogen and oxygen, and a fourth engaging hole 60b corresponding to the first and second engaging holes 10a an 20a; and an engaging part 70 which passes through the first, second, third and fourth engaging holes 10b, 20b, 50b and 60b for thereby interconnecting the front and rear covers 50 and 60 and the frames 10 and 10', respectively.

Here the frames 10 and 10' are made of a metallic material such as stainless and alloy steel and has a main hole 10a in its center portion.

The frame can be configured in various shapes such as a rectangular shape or a circular shape. In the present invention, the rectangular shape is preferable adapted, and its construction will be described.

In the present invention, the frames 10 and 10' function for applying electric power to the electrode plates 30 and forms an electrolysis space sealed by the insulation gasket 20. A plurality of frames 10 and 10' are directly contacted with air, so the frames can function as a heat radiating plate for radiating the head generated in the course of electrolysis.

The edges 10c of the frames 10 and 10' positioned in the interior of the insulation gasket 20 function as a terminal for applying the power to the electrode plates 30 and functions as a support for supporting the electrode plates 30. Even when the electrode plates 30 are made of weak materials, the edges 10c of the frames of the inner side of the insulation gasket 20 support the whole edge portions of the electrode plates, the electrode plates can be stably and reliably supported.

The insulation gasket 20 makes the frame and another frame spaced apart from each other and insulates and seals water. The front insulation gasket 20' makes the frame facing the front cover 50 spaced and at the same time insulates and seals. The rear insulation gasket 20" makes the frame facing the rear cover 60 spaced and insulates and seals water. It is preferred that the insulation gasket 20, and the front and rear insulation gaskets 20' and 20" are made of materials which do not lose their physical properties in the course of electrolysis. For example, it is preferably made of Teflon, rubber, acetal, PP, PE, etc. and is configured in a circular shape.

The electrode plates 30 are positioned in the inner side of the insulation gaskets 20 and are closer to the edges of the main hole 10a of the frame 10. It is preferred that the electrode plates 30 are made of materials which can effectively generate electrolysis. For example, it is preferred that the electrode plates 30 are made of carbon nano tube alloy steel. The carbon nano tube alloy steel is made after carbon nano tube is made into powders, and nickel and tourmaline are made into powders, and the mixtures of the same are compressed in the shapes of electrode plates and are molded. As additives, decarbonated potassium combined compound can be added, and a plastic process is performed at about 1300°C.

The electrode plates 30 can be made of a metal such as stainless and is nano-polished for an efficient electrolysis and in order for the bubbles of hydrogen and oxygen to easily detach. The electrode plates 30 are made of stainless, allot steel or something.

The nano polishing means that the surfaces of the electrode plates 30 are polished by the units of nano. Since the friction forces of the surfaces of the electrode plates 30 can be minimized through the nano polishing process, the bubbles of hydrogen and oxygen can easily detach. In particular, when the sizes of the substance changes from the bulk size to the nano size, the mechanical, thermal, electrical, magnetic and optical properties change. So, it is possible to enhance the electrolysis of water by changing the physical properties through the nano process with respect to the surfaces of the electrode plates 30.

Photo catalyst such as tourmaline can attach on the surfaces of the electrode plates 30. The tourmaline photo catalyst can be ground powder from micro sizes to nano meter sizes and is molded at 1300°C and is attached on the electrode plates 30 using an adhesive or something. The tourmaline is a mineral belonging to a hexagonal system with a crystal structure like crystal and generates power by friction and a lot of anion, while accelerating electrolysis and generating lots of hydrogen and oxygen. The tourmaline is ground powder and is molded for thereby manufacturing a photo catalyst with a lot of micro pores by which the contact surface area with water can be increased. The electrolysis of water can be promoted by attaching the tourmaline photo catalyst on the electrode plates 30.

A spacing ring 40 is positioned in the inner side of the insulation gasket 20 and allows the electrode plates 30 to be closer to the frame 10 while spacing not to contact with the frame 10' facing the electrode plates 30. The cross section of the spacing ring 40 is circular, but it can be rectangular.

The front cover 50 keeps spaced from the facing frame by means of the front insulation gasket 20', and the rear cover 60 keeps spaced from the facing frame by means of the rear insulation gasket 20".

The engaging pat 70 can be implemented in various forms. In the present invention,

The engaging part 70 includes a bar 71 with bolt ends 71 b at its both ends; an insulation layer 72 which surrounds an outer surface of the bar 71; a sealing 73 which is inserted into the bolt ends 71 b protruded from the third engaging hole 50b of the front cover and the fourth engaging hole 60b of the rear cover; and a nut 74 which is engaged to the bolt end 71 inserted by the sealing 73.

At this time, the insulation layer 72 allows the bar 71 passing through the first, second, third and fourth engaging holes 10b, 20b, 50b and 60b not to electrically contact with the frames 10 and 10' and the front and rear covers 50 and 60.

The front cover 50 and the rear cover 60 are electrically insulated from the frames 10 and 10' by means of the front and rear insulation gaskets 20' and 20". The frames 10 and 10' are also electrically insulated by means of the insulation gasket 20. So, the front cover 50 and the rear cover 60 can be used as electrode terminals, and each frame can be used as an electrode terminal. When the front cover 50 and the rear cover 60 are used as electrode terminals, high voltage of about 300 to 700V and low current of 2∼10A are applied. In addition, when the frames 10 and 10' are used as electrode terminals, low voltage of 1∼10V and high current of 100∼300A are applied.

With the above structure, water flows into the inlet hole 51 and the electrode hole 31. In this state, when power is applied to the front and rear covers 50 and 60 and the frames 10 and 10', positive and negative electric charges gather on the surfaces of the electrode plates 30, so electric field is generated between the electrode plates 30. Since the electrolyte space in which electrolysis is performed is a space where electric field is generated, the dimension of the electrolyte space is in proportion to the number of the electrode plates 30. So, the apparatus for generating a mixed gas of hydrogen and oxygen according to the present invention equipped with a plurality of electrode plates 30 has a large size of electrolyte space, so the electrolysis is efficiently performed, and the amount of hydrogen and oxygen increases.

The oxygen and hydrogen bubbles are mixed and discharged to the outside through the exhaust holes 52 and 62.

A lot of heat is generated in the electrolyte space between the electrode plates in the course of electrolysis. Such heat inhibits electrolysis, and in rare cases, explosion might occur. However in the present invention, since the frames 10 and 10' function as a heat radiating plate directly contacting with air, the heat generated in the electrolyte space is conducted to the frames 10 and 10' and is radiated to the outside through air. So, it is possible to radiate without equipping with separate radiating device, as a result of which the construction is simplified, and the manufacture cost decreases, and error can be minimized.

As the present invention may be embodied in several forms without departing from the spirit or essential characteristics thereof, it should also be understood that the above-described examples are not limited by any of the details of the foregoing description, unless otherwise specified, but rather should be construed broadly within its spirit and scope as defined in the appended claims, and therefore all changes and modifications that fall within the meets and bounds of the claims, or equivalences of such meets and bounds are therefore intended to be embraced by the appended claims.

## Claims

1. A hydrogen-oxygen generating apparatus, comprising:
a plurality of frames 10 and 10' which includes a main hole 10a formed in a center portion and a plurality of first engaging holes 10b formed on an outer side of the main hole 10a;
an insulation gasket 20 which is disposed between the frames 10 and 10'a and allows a frame 10 and another frame to space apart while sealing water and includes a second engaging hole 20b corresponding to the first engaging hole 20a;
electrode plates 30 which keep electrically connected states while being closer to the edges 10c of the main hole 10a in the inner side of the insulation gasket 20 and has an electrode hole 31 in the inner side;
a spacing ring 40 which is disposed between the frames 10' facing the electrode plates 30 and keeps electrically insulated by spacing not to contact with the frame 10' facing the electrode plates 30;
a front cover 50 which is installed in front of the frames 10 and 10' and includes an inlet hole 51, an exhaust hole 52 for exhausting the mixed gas of hydrogen and oxygen, and a third engaging hole 50b corresponding to the first and second engaging holes 10b and 20b;
a rear cover 60 which is installed behind the frames 10 and 10' and includes a drain hole 61 for draining water, an exhaust hole 62 for exhausting the mixed gas of hydrogen and oxygen, and a fourth engaging hole 60b corresponding to the first and second engaging holes 10a an 20a; and
an engaging part 70 which passes through the first, second, third and fourth engaging holes 10b, 20b, 50b and 60b for thereby interconnecting the front and rear covers 50 and 60 and the frames 10 and 10', respectively.

2. The apparatus of claim 1, further comprising a front insulation gasket 20' disposed between the frames facing the front cover 50 and having a second engaging hole 20b corresponding to the first engaging hole 10b; and a rear insulation gasket 20" which is disposed between the frames facing the rear cover 60 and has a second engaging hole 20b corresponding to the first engaging hole 10b.

3. The apparatus of claim 1, wherein said engaging part 70 includes:
a bar 71 with bolt ends 71 b at its both ends;
an insulation layer 72 which surrounds an outer surface of the bar 71;
a sealing 73 which is inserted into the bolt ends 71 b protruded from the third engaging hole 50b of the front cover and the fourth engaging hole 60b of the rear cover; and
a nut 74 which is engaged to the bolt end 71 inserted by the sealing 73.

4. The apparatus of claim 1, wherein said electrode plates 30 are made of carbon nano tube alloy steel.

5. The apparatus of claim 1, wherein the surfaces of the electrode plates 30 are nano-polished so that the electrolysis can efficiently take place, and the bubbles of generated oxygen and hydrogen can easily detach.

6. The apparatus of claim 1, wherein the surfaces of the electrode plates 30 are attached by photo catalysts.
